# EUROPÄISCHE PATENTSCHRIFT

(11) **EP 3 516 218 B1**
(45) Veröffentlichungstag und Bekanntmachung des Hinweises auf die Patenterteilung: **17.03.2021**
(21) Anmeldenummer: 17771417.7
(22) Anmeldetag: 19.09.2017
(51) Int. Cl.: F04B 49/06, F04B 35/04, F04B 41/00, F04B 41/02, F04C 18/16, F04C 28/28, B60T 13/66, B60T 17/00, B60T 17/02, B60T 17/22, B01D 53/04, B01D 53/26

(54) **KOMPRESSORSYSTEM FÜR EIN NUTZFAHRZEUG**
COMPRESSOR SYSTEM FOR A WORK VEHICLE
SYSTÈME DE COMPRESSEUR POUR VÉHICULE DE TRAVAIL

(30) Priorität: 21.09.2016 DE 102016011502
(43) Veröffentlichungstag der Anmeldung: 31.07.2019
(73) Patentinhaber: KNORR-BREMSE Systeme für Nutzfahrzeuge GmbH, 80809 München (DE)
(72) Erfinder: ADLER, Tamas, 80809 München (DE); NÉMETH, Huba, 80809 München (DE); TIHANYI, Viktor, 80809 München (DE)
(86) Internationale Anmeldenummer: PCT/EP2017/073554
(87) Internationale Veröffentlichungsnummer: WO 2018/054869

(56) Entgegenhaltungen:
- WO-A1-2012/128770
- CN-A- 105 822 531
- CN-U- 202 186 346
- DE-A1-102005 010 960
- DE-A1-102006 023 632
- DE-A1-102008 009 473
- DE-A1-102010 024 476
- DE-A1-102012 021 597
- DE-A1-102013 101 502
- DE-A1-102013 113 555
- DE-A1-102013 114 304

## Beschreibung

Die vorliegende Erfindung betrifft ein Kompressorsystem für ein Nutzfahrzeug umfassend wenigstens einen Kompressor, wenigstens einen Elektromotor und wenigstens eine Luftaufbereitungseinrichtung.

Aus dem Stand der Technik sind bereits Luftaufbereitungssysteme für Nutzfahrzeuge bekannt.

Luftaufbereitungssysteme für Nutzfahrzeuge sind üblicherweise zusammengesetzt aus mehreren Hauptkomponenten wie Luftkompressor, Luftaufbereitungseinheit sowie mehreren Druckluftspeichern.

Die Anwendung von elektronischen Steuerungseinrichtungen für Luftaufbereitungseinrichtungen (auf englisch: Electronic Control for Air Processing Units (E-APU)) in Nutzfahrzeugen existiert bereits für längere Zeit. Solche Systeme stellen eine Druckkontrolle, eine Lufttrocknungskontrolle und Kreislaufschutzfunktionen bereit.

Für die Druckkontrolle und die Kreisschutzfunktionalitäten benutzen diese Systeme unterschiedliche Drucksensoren um die Drucklevel zu kontrollieren und zu überwachen und dies in verschiedenen Kreisläufen des Druckluftsystems eines Nutzfahrzeuges. Mehrere Magnetventile werden verwendet um Regeneration und Kompressorkontrollfunktionalitäten zu schaffen.

Die Steuerung für die Luftaufbereitungseinheit, die neben den genannten Funktionalitäten besteht, kann in die sog. Luftaufbereitungseinheiten mit integriert werden.

Auch sind mehrere Systeme bekannt, bei denen die Steuerung für die Luftaufbereitungseinheit nicht integriert ist, sondern bei denen diese als externe Lösung ausgebildet ist, so dass nur die Aktuatoren und Drucksensoren in der Luftaufbereitungseinheit untergebracht sind.

Eine derartige Steuerungseinrichtung ist beispielsweise in der DE 10 2011 107 155 A1 bekannt.

Es ist die Aufgabe der vorliegenden Erfindung, ein Kompressorsystem für ein Nutzfahrzeug der eingangs genannten Art in vorteilhafter Weise weiterzubilden, insbesondere dahingehend, dass das Kompressorsystem für ein Nutzfahrzeug einfacher aufgebaut sein kann und effizienter ausgestaltet sein kann.

Diese Aufgabe wird erfindungsgemäß gelöst durch ein Kompressorsystem mit den Merkmalen des Anspruchs 1. Danach ist vorgesehen, dass ein Kompressorsystem für ein Nutzfahrzeug wenigstens einen Kompressor, wenigstens einen Elektromotor, der den Kompressor antreibt, wenigstens eine Elektromotorsteuerungseinheit und wenigstens eine Luftaufbereitungseinrichtung aufweist, wobei die Elektromotorsteuerungseinheit derart beschaffen und eingerichtet ist, dass sie den Elektromotor und zumindest teilweise die Luftaufbereitungseinrichtung steuert.

Die Erfindung basiert auf dem Grundgedanken, durch eine Funktionsintegration in der Eletromotorsteuerungseinheit sowohl die Steuerungsfunktionalität für den Kompressor als auch für die Luftaufbereitungseinrichtung in der Elektromotorsteuerungseinheit zu integrieren. Hierdurch wird es möglich, die bereits vorhandene leistungsfähige Elektromotorsteuerungseinheit mit weiteren Funktionalitäten zu belegen, so dass eine weitere Steuerungseinheit für die Luftaufbereitungseinrichtung wegfallen kann.

Des Weiteren kann vorgesehen sein, dass der Kompressor ein Schraubenkompressor ist. Hierdurch ergibt sich der Vorteil, dass eine effiziente und leistungsfähige Druckluftbereitstellung mittels eines Schraubenkompressors möglich ist. Schraubenkompressoren weisen insbesondere in neuen Anwendungsfeldern, wie Hybrid-Nutzfahrzeugen, große Vorteile auf, da sie effizienter betrieben werden können als derzeitige Kompressoren, die davon ausgehen, dass das Antriebsaggregat des Nutzfahrzeugs ständig betrieben wird. Dies ist jedoch bei Hybrid-Nutzfahrzeugen nicht mehr der Fall.

Darüber hinaus kann vorgesehen sein, dass die Luftaufbereitungseinrichtung ein Mehrkreisschutzventil und mehrere Druckluftspeicher aufweist. Diese Funktionalitäten können ebenfalls durch die Elektromotorsteuerungseinheit mit überwacht und angesteuert werden.

Außerdem kann vorgesehen sein, dass die Elektromotorsteuerungseinheit Signaleingänge aufweist, die derart beschaffen und eingerichtet sind, dass sie zur Verarbeitung der Sensorsignale der Luftaufbereitungseinrichtung dienen. Mittels dieser Signaleingänge kann einfach erreicht werden, dass die Elektromotorsteuerungseinheit und die Luftaufbereitungseinrichtung miteinander kommunizieren können. Hierzu wird insbesondere vorgesehen, dass die Elektromotorsteuerungseinheit mit den entsprechenden, normierten bzw. gemäß Industriestandard spezifizierten Anschlüssen bzw. Signalanschlüssen versehen wird.

Die Elektromotorsteuerungseinheit kann Signalausgänge aufweisen, die derart beschaffen und eingerichtet sind, dass sie zur Ansteuerung von Aktuatoren der Luftaufbereitungseinheit dienen. Somit wird es möglich, dass die Luftaufbereitungseinrichtung entsprechend angesteuert werden kann, wobei bei den Aktuatoren insbesondere die Magnetventile oder sonstigen Ventile der Luftaufbereitungseinrichtung anzusteuern sind. Ein effizienter Betrieb der Luftaufbereitungseinrichtung wird hierdurch möglich.

Darüber hinaus kann vorgesehen sein, dass die Elektromotorsteuerungseinheit ein Drucküberwachungsregelmodul aufweist, das derart beschaffen und eingerichtet ist, dass mittels des Drucküberwachungsregelmoduls der Druck in der Luftaufbereitungseinrichtung überwachbar und/oder regelbar ist. Hierdurch wird es möglich, die Luftaufbereitungseinrichtung in wesentlicher Funktionalität zu überwachen und zu regeln, nämlich im Hinblick auf den in der Luftaufbereitungseinrichtung vorherrschenden Druck und insbesondere den dort vorherrschenden Arbeitsdruck. Anhand dieser Überwachung wird es möglich, die Luftaufbereitungseinrichtung effizient und effektiv betreiben zu können und diese über die Elektromotorsteuerungseinheit mit ihrem Drucküberwachungsregelmodul entsprechend zu überwachen und zu regeln.

Des Weiteren kann vorgesehen sein, dass das Drucküberwachungsregelmodul weiter derart beschaffen und eingerichtet ist, dass mittels des Drucküberwachungsregelmoduls der Druck in wenigstens einem weiteren Druckluftverbraucher des Nutzfahrzeugs überwachbar und/oder regelbar ist. Dadurch wird es möglich, auch in weiteren Teilen des Druckluftsystems des Nutzfahrzeugs und nicht nur in der Luftaufbereitungseinrichtung eine entsprechende Überwachung und Regelung durch das Drucküberwachungsregelmodul der Elektromotorsteuerungseinheit bereitstellen zu können.

Des Weiteren kann vorgesehen sein, dass die Elektromotorsteuerungseinheit ein Lufttrocknungsregelmodul aufweist, das derart beschaffen und eingerichtet ist, dass mittels des Lufttrocknungsregelmoduls die Lufttrocknungsfunktion in der Luftaufbereitungseinrichtung überwachbar und/oder regelbar ist. Hierdurch wird es möglich, eine weitere wichtige Funktionalität der Luftaufbereitungseinrichtung überwachen und regel zu können.

Außerdem ist denkbar, dass die Elektromotorsteuerungseinheit ein Drehzahlregelmodul aufweist, das derart beschaffen und eingerichtet ist, dass mittels des Drehzahlregelmoduls die Drehzahl des Elektromotors steuerbar und/oder regelbar ist. Über die Drehzahlregelung kann die Leistungsaufnahme des Elektromotors und auch der Betrieb des Elektromotors entsprechend gesteuert und auch eingeregelt werden. Dies kann belastungsgerecht und unmittelbar erfolgen.

Weitere Einzelheiten und Vorteile der Erfindung sollen nun anhand eines in den Zeichnungen dargestellten Ausführungsbeispiels näher erläutert werden.

Es zeigen:
- Fig. 1: eine schematische Ansicht einer Luftaufbereitungseinrichtung für ein Nutzfahrzeug; und
- Fig. 2: eine perspektivische Anordnung auf das Ausführungsbeispiel gemäß Fig. 1.

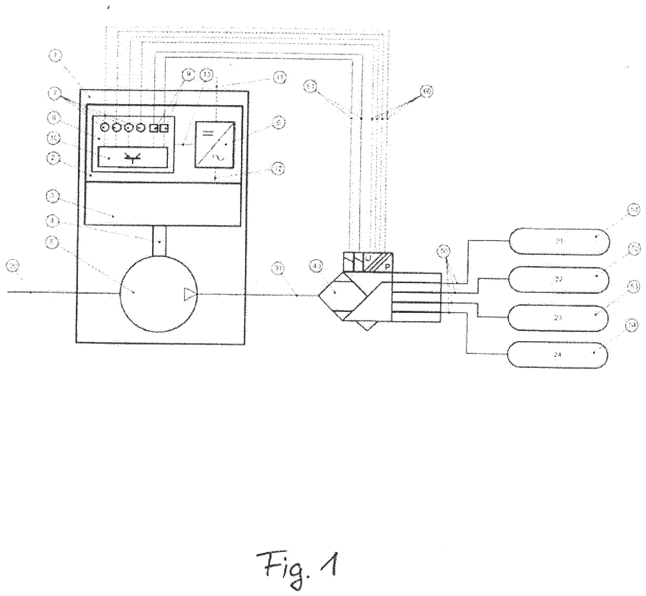

Fig. 1 zeigt eine schematische Zeichnung eines Nutzfahrzeugluftaufbereitungssystems mit einem Kompressor 5, der durch einen Elektromotor 3 angetrieben wird.

Der Antrieb des Kompressors 5 über den Elektromotor 3 erfolgt über eine gemeinsame Antriebswelle 4 und eine Elektromotorsteuerungseinheit 2. Alle diese Komponenten sind in einem gemeinsamen Gehäuse 1 angeordnet.

Bei dem Kompressor 5 handelt es sich um einen Schraubenkompressor 5.

Darüber hinaus ist die Luftaufbereitungseinheit 40 vorhanden, die ein Mehrkreisschutzventil und mehrere Druckluftspeicher 51-54 mit eingespeicherter Druckluft 21-24 aufweist.

Der Kompressor 5 erhält Umgebungsluft durch die Ansaugleitung 30 und der Auslass ist verbunden mit der Luftaufbereitungseinheit 40 über eine Luftauslassleitung 31.

In der Elektromotorsteuerungseinheit 2 sind die folgenden Bestandteile integriert:
Die Kontrolleinheit 10 für die Luftaufbereitungseinrichtung 40 (A. 10) und die Kontrolleinheit 10 für den Frequenzeinheitumrechner 6 für den Elektromotor 3, die mit einander verbunden sind über eine elektrische Kontrollleitung 30.

Der Frequenzumrechner 6 hat einen Energieanschluss 11 und sein Ausgang ist verbunden mit dem Elektromotor 3 über eine entsprechende elektrische Leitung 12.

Die Elektromotorsteuerungseinehit 2 ist ausgestattet mit entsprechenden Signaleingängen 7 (analoge Signaleingänge 7) für die Drucksensorensignalaufnahme und die Anschlüsse zu den Magnetventilen 9, um in der Lage zu sein, alle Funktionen der Luftaufbereitungseinheit 40 zu überwachen und auch die Tätigkeit der verschiedenen pneumatischen Verbraucher 50 des Nutzfahrzeugs.

Die analogen Signaleingänge 7 der Elektromotorsteuerungseinheit 2 sind mit der Luftaufbearbeitungseinrichtung 40 über elektrische Anschlüsse 60 verbunden.

Gleiches gilt für die Ventilantriebe 9, die ebenfalls entsprechend verbunden sind über Anschlussleitungen 61.

Die integrierte Steuerungseinheit 2 ist in der Lage, den Frequenzumrechner 6 des Elektromotors 3 zu kontrollieren und anzusteuern und auch sämtliche Funktionen der Luftaufbereitungseinrichtung 40, wozu die Signaleingänge 7 und Signalausgänge 9 verwendet werden.

Mithilfe dieser Anschlüsse 7 und 9 wird es möglich, die Drucksituation in der Luftaufbereitungseinrichtung 40 und die Lufttrocknungsfunktion entsprechend kontrollieren zu können.

Darüber hinaus ist es möglich, den Fahrzeugstatus, den Elektromotorstatus und auch den Luftaufbereitungsstatus entsprechend zu überwachen und eine entsprechende Drehzahl an den Elektromotor 3 abzugeben, um eine optimale und bestmögliche Betriebscharakteristik für den Kompressor 5 bereitstellen zu können.

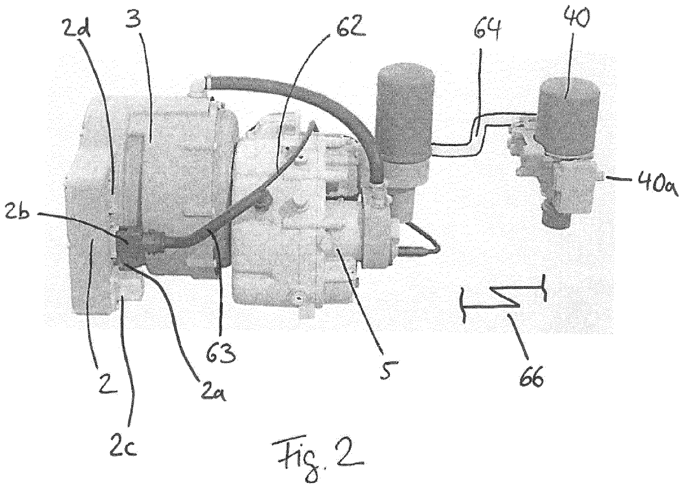

**Fig. 2** zeigt in perspektivischer Ansicht das in Fig. 1 gezeigte Nutzfahrzeugluftaufbereitungssystem mit dem Kompressor 5, der durch den Elektromotor 3 angetrieben wird.

Weiter ist in Fig. 2 die Luftaufbereitungseinheit 40 sowie die zugehörige (Druckluft- )Luftversorgungsleitung 64 gezeigt.

Die Elektromotorsteuerungseinheit 2 ist dabei direkt auf dem Elektromotor 3 angeordnet.

Die Elektromotorsteuerungseinheit 2 weist dabei zwei Datenkabelanschlüsse 2a und 2b auf.

Weiter ist ein Stromanschluss 2c vorgesehen.

Außerdem weist die Elektromotorsteuerungseinheit 2 einen Anschluss 2d zur Verbindung mit z.B. dem CAN-Bus eines Nutzfahrzeugs auf.

Am Datenkabelanschluss 2a ist ein erstes Datenkabel 62 angeschlossen.

Mittels des Datenübertragungskabels 62 ist die Elektromotorsteuerungseinheit 2 mit dem Elektromotor 3 in Signalverbindung.

Im gezeigten Ausführungsbeispiel ist das Datenübertragungskabel 62 mit einem Öllevelsensor des Schraubenkompressors 3 verbunden und dient zur Übertragung von Öllevelsensordaten an die Elektromotorsteuerungseinheit 2.

Am Datenkabelanschluss 2a ist ein zweites Datenkabel 63 angeschlossen.

Auch mittels des Datenübertragungskabels 63 ist die Elektromotorsteuerungseinheit 2 mit dem Elektromotor 3 in Signalverbindung.

Im gezeigten Ausführungsbeispiel ist das Datenübertragungskabel 63 mit einem Temperatursensor des Schraubenkompressors 3 verbunden und dient zur Übertragung von Temperatursensordaten an die Elektromotorsteuerungseinheit 2.

Grundsätzlich können über die Datenübertragungskabel auch weitere Sensoren mit der Elektromotorsteuerungseinheit 2 verbunden und entsprechende Betriebsdaten des Schraubenkompressors 3 übertragen werden.

Des Weiteren ist die Elektromotorsteuerungseinheit 2, die integraler Bestandteil des Elektromotors 3 ist, über den Anschluss mit dem Datenbus 66 des Nutzfahrzeugs verbunden.

Bei dem Datenbus 66 handelt es sich hier im gezeigten Ausführungsbeispiel um einen CAN-Bus, der der CAN-Bus des Nutzfahrzeugs ist.

Die Kommunikation zwischen der Elektromotorsteuerungseinheit 2, die Bestandteil des Elektromotors 3 ist, und der Luftaufbereitungseinheit 40 erfolgt somit über den CAN-Bus 66.

Die Luftaufbereitungseinheit 40 weist einen Anschluss 40a zum Anschluss an den CAN-Bus 66 auf.

Durch die Nutzung des CAN-Bus 66 wird erreicht, dass die Signalübertragung weniger störanfällig ist und auch weniger Störsignale auftreten können.

Insbesondere kann mit deutlich kürzeren Leitungen zur Signalübertragung von der Elektromotorsteuerungseinheit 2 zum CAN-Bus 66 und vom CAN-Bus 66 hin zur Luftaufbereitungseinheit 40 gearbeitet werden, wodurch eine Funktionsintegration und auch eine Nutzung der bestehenden ohnehin vorhandenen Signalübertragungsinfrastruktur des Nutzfahrzeugs möglich wird.

Wie dies aus Fig. 1 und Fig. 2 ersichtlich ist, sind der Elektromotor 3, der Schraubenkompressor 5 und auch die Luftaufbereitungseinheit 40 eigenständige Einheiten.

Allerdings werden durch die Elektromotorsteuerungseinheit 2 des Elektromotors 3 sowohl der Elektromotor 3 als auch die Luftaufbereitungseinheit 40 angesteuert.

Es erfolgt somit eine Funktionsintegration der Steuerung und Regelung für den Schraubenkompressor 5 und die Luftaufbereitung 40 in der Steuerungseinheit 2 des Elektromotors 3, die ohnehin mit einer leistungsstarken Steuerungs- und Regelungseinheit versehen sein muss.

Somit können teure Elektronikkomponenten eingespart werden, nämlich hier insbesondere im Bereich des Schraubenkompressors 5, aber auch im Bereich der Luftaufbereitungseinheit 40.

Durch die Nutzung des Signalübertragungsbusses, hier des CAN-Bus 66, wird weiter eine besonders vorteilhafte Signalübertragung für die Ansteuerung der Luftaufbereitungseinheit 40 durch die Elektromotorsteuerungseinheit 2 ermöglicht.

### BEZUGSZEICHENLISTE

- 1: Gehäuse
- 2: Elektromotorsteuerungseinheit
- 2a: Datenkabelanschluss
- 2b: Datenkabelanschluss
- 2c: Stromanschluss
- 2d: Anschluss
- 3: Elektromotor
- 4: Antriebswelle
- 5: Kompressor
- 6: Frequenzeinheitumrechner
- 7: Signaleingänge
- 9: Magnetventil
- 10: Kontrolleinheit
- 11: Energieanschluss
- 12: elektrische Leitung
- 21: Druckluft
- 22: Druckluft
- 23: Druckluft
- 24: Druckluft
- 30: Ansaugleitung / Kontrollleitung
- 31: Luftauslassleitung
- 40: Luftaufbereitungseinheit
- 40a: Anschluss
- 50: pneumatischer Verbraucher
- 51: Druckluftspeicher
- 52: Druckluftspeicher
- 53: Druckluftspeicher
- 54: Druckluftspeicher
- 60: elektrische Anschlüsse
- 61: Anschlussleitungen
- 62: Datenübertragungskabel
- 63: Datenübertragungskabel
- 64: (Druckluft-)Luftversorgungsleitung
- 66: Datenbus, CAN-Bus

## Patentansprüche

1. Kompressorsystem für ein Nutzfahrzeug aufweisend wenigstens einen Kompressor (5), wenigstens einen Elektromotor (3), der den Kompressor (5) antreibt, wenigstens eine Elektromotorsteuerungseinheit (2) und wenigstens eine Luftaufbereitungseinrichtung (40),
**dadurch gekennzeichnet, dass**
die Elektromotorsteuerungseinheit (2) derart beschaffen und eingerichtet ist, dass sie den Elektromotor (3) und zumindest teilweise die Luftaufbereitungseinrichtung (40) steuert.

2. Kompressorsystem nach Anspruch 1,
**dadurch gekennzeichnet, dass**
der Kompressor (5) ein Schraubenkompressor (5) ist.

3. Kompressorsystem nach Anspruch 1 und Anspruch 2,
**dadurch gekennzeichnet, dass**
die Luftaufbereitungseinrichtung (40) ein Mehrkreisschutzventil und mehrere Druckluftspeicher (51-54) aufweist.

4. Kompressorsystem nach einem der vorhergehenden Ansprüche,
**dadurch gekennzeichnet, dass**
die Elektromotorsteuerungseinheit (2) Signaleingänge (7) aufweist, die derart beschaffen und eingerichtet sind, dass sie zur Verarbeitung der Sensorsignale der Luftaufbereitungseinrichtung (40) dienen.

5. Kompressorsystem nach einem der vorhergehenden Ansprüche,
**dadurch gekennzeichnet, dass**
die Elektromotorsteuerungseinheit (2) Signalausgänge (9) aufweist, die derart beschaffen und eingerichtet sind, dass sie zur Ansteuerung von Aktuatoren der Luftaufbereitungseinrichtung (40) dienen.

6. Kompressorsystem nach einem der vorhergehenden Ansprüche,
**dadurch gekennzeichnet, dass**
die Elektromotorsteuerungseinheit (2) ein Drucküberwachungsregelmodul aufweist, das derart beschaffen und eingerichtet ist, dass mittels des Drucküberwachungsregelmoduls der Druck in der Luftaufbereitungseinrichtung (40) überwachbar und/oder regelbar ist.

7. Kompressorsystem nach Anspruch 6,
**dadurch gekennzeichnet, dass**
das Drucküberwachungsregelmodul weiter derart beschaffen und eingerichtet ist, dass mittels des Drucküberwachungsregelmoduls der Druck in wenigstens einem weiteren Druckluftverbraucher des Nutzfahrzeugs überwachbar und/oder regelbar ist.

8. Kompressorsystem nach einem der vorhergehenden Ansprüche,
**dadurch gekennzeichnet, dass**
die Elektromotorsteuerungseinheit (2) ein Lufttrocknungsregelmodul aufweist, das derart beschaffen und eingerichtet ist, dass mittels des Lufttrocknungsregelmoduls die Lufttrocknungsfunktion in der Luftaufbereitungseinrichtung (40) überwachbar und/oder regelbar ist.

9. Kompressorsystem nach einem der vorhergehenden Ansprüche,
**dadurch gekennzeichnet, dass**
die Elektromotorsteuerungseinheit (2) ein Drehzahlregelmodul aufweist, das derart beschaffen und eingerichtet ist, dass mittels des Drehzahlregelmoduls die Drehzahl des Elektromotors (3) steuerbar und/oder regelbar ist.

## Claims

1. Compressor system for a utility vehicle, comprising at least one compressor (6), at least one electric motor (3) that drives the compressor (5), at least one electric motor control unit (2) and at least one air processing device (40),
**characterised in that**
the electric motor control unit (2) is configured and designed such that it controls the electric motor (3) and at least in part the air processing device (40).

2. Compressor system according to Claim 1,
**characterised in that**
the compressor (5) is a screw-type compressor (5).

3. Compressor system according to Claims 1 and 2,
**characterised in that**
the air processing device (40) comprises a multi-circuit protection valve and a plurality of compressed-air reservoirs (51 to 54).

4. Compressor system according to any of the preceding claims,
**characterised in that**
the electric motor control unit (2) has signal inputs (7), which are configured and designed such that they serve for processing the sensor signals from the air processing device (40).

5. Compressor system according to any of the preceding claims,
**characterised in that**
the electric motor control unit (2) has signal outputs (9), which are configured and designed such that they serve for the control of actuators of the air processing device (40).

6. Compressor system according to any of the preceding claims,
**characterised in that**
the electric motor control unit (2) comprises a pressure monitoring control module, which is configured and designed such that by means of the pressure monitoring control module the pressure in the air processing device (40) can be monitored and/or regulated.

7. Compressor system according to Claim 6,
**characterised in that**
the pressure monitoring control module is also configured and designed such that by means of the pressure monitoring control module the pressure in at least one further compressed-air consumer of the utility vehicle can be monitored and/or regulated.

8. Compressor system according to any of the preceding claims,
**characterised in that**
the electric motor control unit (2) comprises an air-dryer control module, which is configured and designed such that by means of the air-dryer control module the air-drying function in the air processing device (40) can be monitored and/or regulated.

9. Compressor system according to any of the preceding claims,
**characterised in that**
the electric motor control unit (2) comprises a rotation speed control module, which is configured and designed such that by means of the rotation speed control module the rotation speed of the electric motor (3) can be controlled and/or regulated.

## Revendications

1. Système de compresseur d'un véhicule utilitaire comprenant au moins un compresseur (5), au moins un moteur (3) électrique qui entraîne le compresseur (5), au moins une unité (2) de commande du moteur électrique et au moins un dispositif (40) de traitement de l'air,
**caractérisé en ce que**
l'unité (2) de commande du moteur électrique est faite et conçu pour commander le moteur (3) électrique et au moins en partie le dispositif (40) de traitement de l'air.

2. Système de compresseur suivant la revendication 1,
**caractérisé en ce que**
le compresseur (5) est un compresseur (5) à vis.

3. Système de compresseur suivant la revendication 1 et la revendication 2,
**caractérisé en ce que**,
le dispositif (40) de traitement de l'air a une soupape de protection à plusieurs circuits et plusieurs accumulateurs (51 à 54) d'air comprimé.

4. Système de compresseur suivant l'une des revendications précédentes,
**caractérisé en ce que**
l'unité (2) de commande du moteur électrique a des entrées (7) de signal, qui sont faites et conçues de manière à servir au traitement des signaux de capteur du dispositif (40) de traitement de l'air.

5. Système de compresseur suivant l'une des revendications précédentes,
**caractérisé en ce que**
l'unité (2) de commande du moteur électrique a des sorties (9) de signal, qui sont faites et conçues de manière à servir à commander des actionneurs du dispositif (40) de traitement de l'air.

6. Système de compresseur suivant l'une des revendications précédentes,
**caractérisé en ce que**
l'unité (2) de commande du moteur électrique a un module de réglage de contrôle de la pression, qui est fait et conçu pour que, au moyen du module de réglage de contrôle de la pression, la pression dans le dispositif (40) de traitement de l'air puisse être contrôlée et/ou réglée.

7. Système de compresseur suivant la revendication 6,
**caractérisé en ce que**
le module de réglage de contrôle de la pression est fait et conçu en outre de manière à pouvoir, au moyen du module de réglage du contrôle de la pression, contrôler et/ou régler la pression dans au moins un autre consommateur d'air comprimé du véhicule utilitaire.

8. Système de compresseur suivant l'une des revendications précédentes,
**caractérisé en ce que**
l'unité (2) de commande du moteur électrique a un module de réglage du séchage de l'air, qui est fait et conçu pour pouvoir, au moyen du module de réglage du séchage de l'air, contrôler et/ou régler la fonction de séchage de l'air dans le dispositif (40) de traitement de l'air.

9. Système de compresseur suivant l'une des revendications précédentes,
**caractérisé en ce que**
l'unité (2) de commande du moteur électrique à un module de réglage de la vitesse de rotation, qui est fait et conçu de manière à pouvoir, au moyen du module de réglage de la vitesse de rotation, commander et/ou régler la vitesse de rotation du moteur (3) électrique.
